# EUROPEAN PATENT APPLICATION

(11) **EP 4 480 633 A1**
(43) Date of publication of application: **25.12.2024**
(21) Application number: 24182072.9
(22) Date of filing: 13.06.2024
(51) Int. Cl.: B23Q 7/04

(54) **MANIPULATING DEVICE FOR EXTRACTING WORKPIECES FROM CNC LATHE AND PLACING THEM ON PALLETS**

(30) Priority: 21.06.2023 CZ 202341089 U; 21.06.2023 CZ 202341087 U
(71) Applicant: CNC invest, s.r.o., 10800 Praha (CZ)
(72) Inventor: Novak, Martin, 25263 Roztoky (CZ); Nemecek, David, 10800 Praha (CZ); Macek, Jiri, 27374 Zichovec (CZ)
(74) Representative: Malusek, Jiri

(57) **Abstract**

Manupulating device for removing workpieces from a CNC lathe equipped with a removal opening through which a movable driving element passes, made as a movable belt (2) for carrying a carrier (24) guided by a rail (39), on which, by its lower part, a trolley (3) of a gripper (5), the front arm (28) of which is pivotally connected via pins to the carrier (24), whereby at the upper ends (37) the front arm (28) and the rear arm (29) are connected via a rectangular support plate (31) provided with pins, on which a gripper (5) for the workpiece (14) is arranged, while on the side of the front arm (28) which is closer to the workspace (30) of the CNC lathe (23) an upper pulley (20) and a lower pulley (21) are arranged, which are configured for movement in the guide grooves (8, 9) of plates (6, 7), wherein the rear quiding plate (6) with the first guide groove (8) for guiding the lower pulley (21) is arranged in the palletizing module (10), and the front transfer plate (7) with the second guide groove (9) for guiding the upper pulley (20) is arranged inside the workspace (30) of the CNC lathe (23).

## Description

### Technical backround

The invention concerns manipulation of finished workpieces, especially when turning on CNC lathes with two spindles, more precisely it concerns extraction of workpieces from the counter-spindle of the machine and their transport out of the machine space. The invention also relates to oriented storage of the workpiecies into storage palletes as a subsequent system of the complete production line.

### State of the art

In technical practice, there are several ways of extraction workpieces from the machine. One of the simpliest is to extract workpieces into a container designed for this purpose by means of a mechanical spoon provided inside of the machine. In addition, workpieces can be removed by means of a conveyor belt provided partly inside the machine and partly out of the machine, into a prepared container. Outside or inside the machine there may be provided a robot which store workpieces on a storage pallet. Another option is a gantry manipulator above the machine that stores workpieces in the storage pallets

Robots and some manipulators required that the machine is stopped during the manipulation, such creating unproductive time, which is a major disadvantage especially for workpieces with short machining times. None of the systems allow oriented workpiece placement, i.e. oriented placement, which is important for subsequent automatic measurement and at the same time uninterrupted operation of the CNC lathe. In the case of gantry manipulators, the solution is space consuming and usually requires penetrations through the CNC lathe structure. In cases with the storage of final workpieces in containers, surface damage of workpieces often occurs, which is particularly harmful for edges and functional surfaces.

Document CZ26194U1 discloses an automatic vertical stacker for handling with parts, that are placed on pallets and loaded into the stacker, which are then manipulated by a robotic arm. The stacker comprises a stationary tray in which a cage is movably arranged in the vertical direction, to which a supply trolley is removably adjacent on one side and a stationary picking table is adjacent on the opposite side. The supply trolley consists of a prismatic frame fitted with pallet guide rails. The cage contains a set of pairs of guide rails which are substantially the same vertical pitch and horizontal spacing as the guide rails on the supply trolley. The picking table is constructed as a prismatic weldment having a pair of guide rails on its upper part at the same horizontal spacing as the rails, and is provided with a feeder for catching the pallet from the cage and removing and retracting it.

The aim of the invention is to introduce a manipulation device for extraction of finished workpieces from the CNC lathe, which allows their transport out of the machine space and forwarding into grippers of the palletizing module, to ensure oriented placement into storage pallets.

### Summary of the invention

The above-mentioned shortcomings are eliminated by manipulating device for extracting workpieces from CNC lathe and placing them on pallets according to the characterizing part of claim 1.

Preferred embodiments are defined in the dependent claims.

### Description of drawings

The invention will be further explained by means of drawings in which Fig. 1 shows the linear workpiece transport module with a trolley equipped with a workpiece gripper in its extreme positions, Fig. 2 shows a detail of the gripper trolley and the front transfer plate, Fig. 3 is a detail of the gripper trolley and rear guiding plate, Fig. 4 is a simplified view of the CNC lathe with palletizing module, Fig. 5 is a detail of the gripper trolley and gripper of palletizing arm just before workpiece transfer, Fig. 6 is a detail of the gripper of palletizing arm when inserting the workpiece into the pallet with the first grasping part downwards, Fig. 7 is a detail of the trolley in the gripper area and the stationary gripper when tranfering the workpiece, Fig. 8 is a view of the stationary gripper and the gripper of palletizing arm just before transfering the workpiece, Fig. 9 is a detail of gripper of the palletizing arm when the workpiece is inserted into the pallet with the shaped third part downwards, Fig. 10 is a detail of the palletizing module according to the invention with gripper of the palletizing arm and pallet in the bottom view and Fig. 11 is a variant of the movable driving element.

### Description of embodiments of the invention

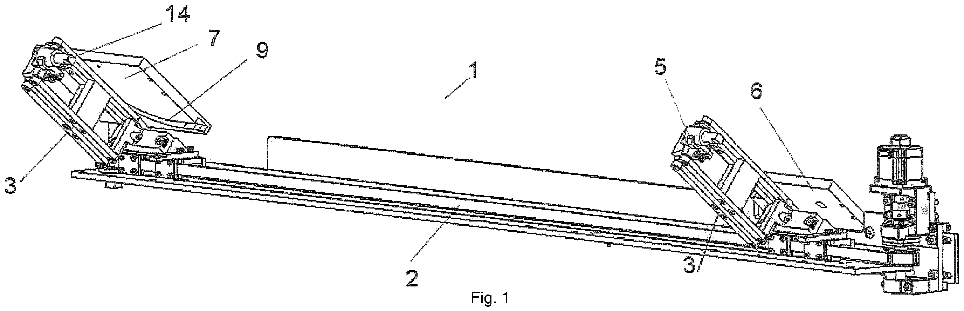

Fig. 1 illustrates a linear workpiece transport module 1 having a longitudinal movable belt 2, by means of which a trolley 3 of a gripper 5 for workpieces 14 extracted from a CNC lathe is transfered into the space of a palletizing module 10 arranged adjacent thereto on the right side of the movable belt 2 by the view from the interior of the lathe outwards. It can be seen that on each side of the movable belt 2 there are guiding plates 6, 7 arranged whose interaction with the trolley 3 will be discussed later and these plates 6, 7 are provided with guide grooves 8, 9.

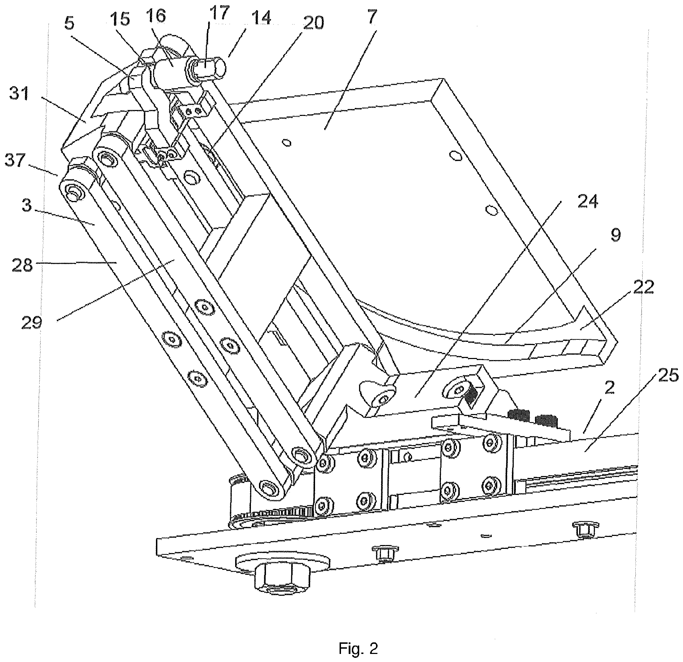

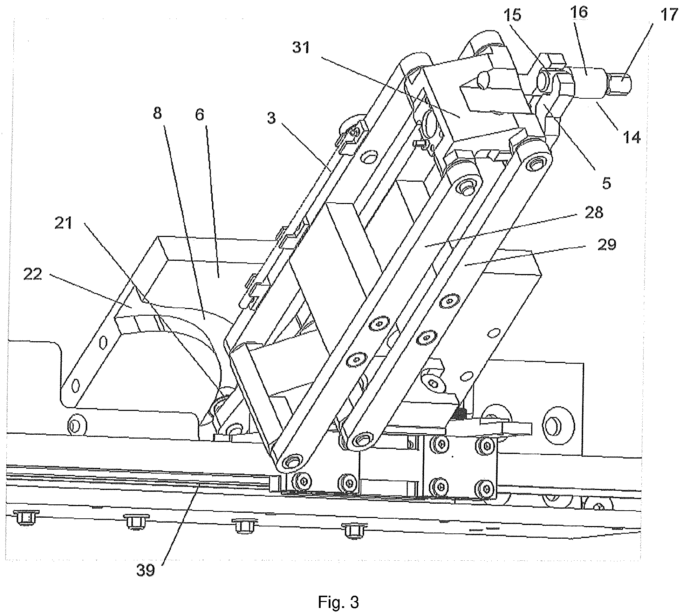

In Fig. 2, it can be seen that the trolley 3 of the gripper 5 is made as a kinematic body made as a parallelogram. The trolley 3 is arranged by its lower part on a carrier 24, which can be carried, for example, by a toothed belt 25 or made as a power nut through which the trolley 3 is carried by means of a power screw. The carrier 24 is guided by a rail 39, which is shown in Fig. 3. This allows the trolley 3 of the gripper 5 to move from one end of the movable belt 2 to the other. The trolley 3 has two parallel arms, namely a rear arm 29 and a front arm 28, both in the form of a frame, the front arm 28 being pivotally connected to the carrier 24 via pins. At the upper ends 37, the front arm 28 is connected to the rear arm 29 via a rectangular support plate 31 provided with pins on which the gripper 5 for the workpiece 14 is arranged. The carrier 24 is provided on one side, facing away from the movable belt 2, with an obliquely chamfered surface on which the front arm 28 is arranged, so that the trolley 3 is positioned at an angle to the movable belt 2, but may also be arranged perpendicular to the movable belt 2. Fig. 2 shows the situation after the trolley 3 has been erected in the workspace 30 of the CNC lathe. It can best be seen that, on the adjacent side to the front transfer plate 7, the upper pulley 20 is arranged at the top of the front arm 28, which engages the second guide groove 9 and rises itself from horizontal position to an upright position to allow the workpiece 14 to be extracted from the machine chuck.

Fig. 3 shows a detail of the trolley 3 of gripper 5 and the rear guiding plate 6. It can be seen that, on the adjacent side to the rear guiding plate 6, a lower pulley 21 is arranged at the bottom of the front arm 28 which engages the first guide groove 8 and from the horizontal transport position is erected to allow the workpiece 14 to be extracted by the gripper 34 of the palletizing arm 27 or the stationary gripper 32. The rear guiding plate 6 is arranged lower relativly to the front transfer plate 7 to allow the lower pulley 21 to be driven into the first guide groove 8, since the lower pulley 21 is lower than the upper pulley 20.

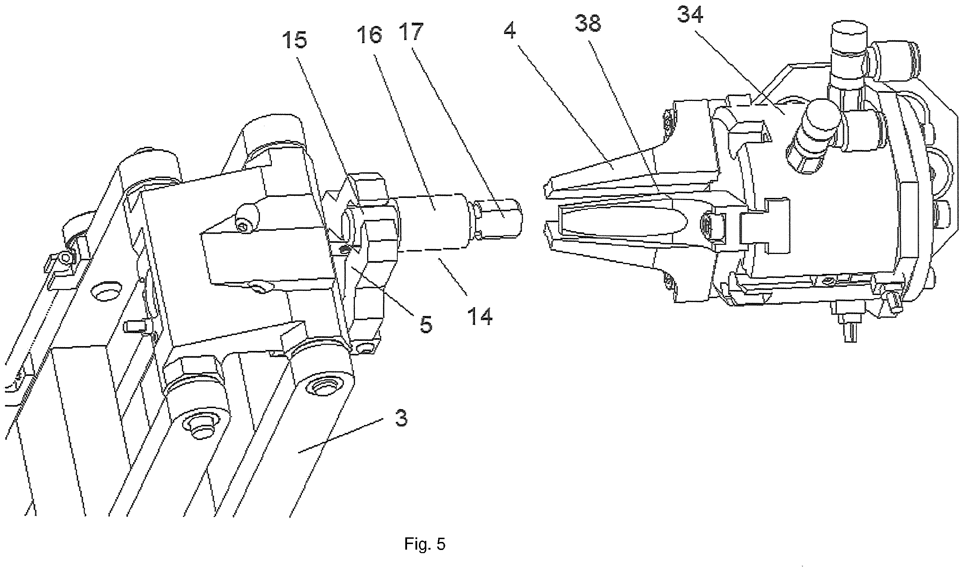

Thus, the upper pulley 20 is driven into the second guide groove 9, lifting the trolley 3 to the position shown in Fig. 2. The rear guiding plate 6 is already located outside the CNC lathe in the palletizing module 10, and therein the gripper 34 of the palletizing arm 27 is arranged, shown in Fig. 5, with the axial clamp 4 having grasping throughs 38 inside, which take the workpiece 14 from the gripper 5 and takes care of placing the workpiece 14 on the pallet 13. The two plates 6, 7 have the same inclination.

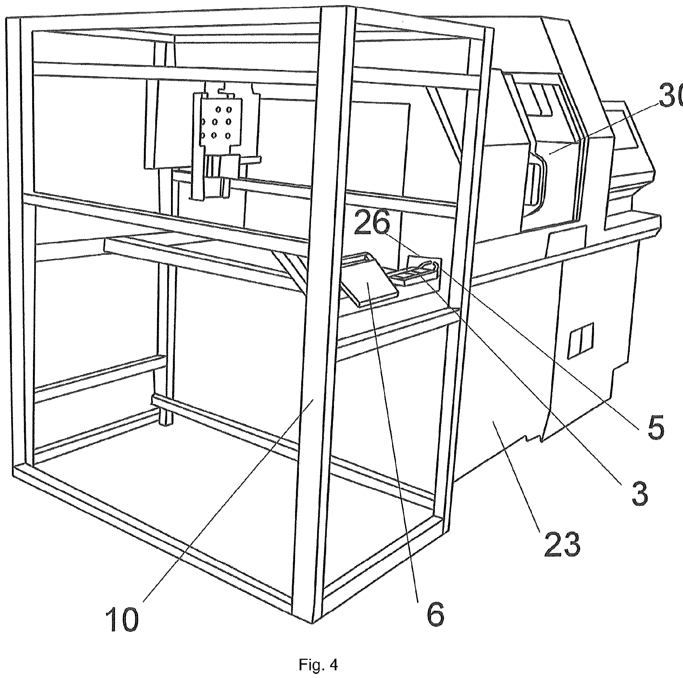

Fig. 4 shows a simplified view of the CNC lathe 23 with its workspace 30, from which the workpiece 14 is extracted. It can be seen that a through opening 26 is made in the side of the machine, into which the trolley 3 enters and exits in a horizontal transport position. In known solutions, a conveyor is guided through this opening 26, on which the workpiece 14 inside the workspace 30 is mechanically laid down. The conveyor carries the workpiece 14 from the workspace to a storage box, into which it is freely lowered from the conveyor.

In the presented solution, no conveyor is led through the aforementioned removal opening 26, but the movable belt 2 is led here by means of which the aforementioned trolley 3 is carried. It can be seen here that a tilted rear guiding plate 6 is arranged outside the CNC lathe 23 in the palletizing module 10 and for illustration, the trolley 3 is shown in a tilted state as it enters the workspace 30 of the CNC lathe 23 through the opening 26. It is in the tilted state in order to fit into the opening 26.

The front transfer plate 7 is arranged inside the workspace 30, where, behind the opening 26, thanks to the second guide groove 9 of the front transfer plate 7, into which the upper pulley 20 is driven, the trolley 3 is lifted from tilted state together with the gripper 5, and the latter can remove the workpiece 14 from the finishing spindle. After the workpiece 14 has been extracted, again thanks to the second guide groove 9 of the transfer plate 7, during the backward movement, the trolley 3 with the workpiece 14 is laid down the transport movable belt 2 so, that it can pass through the through opening 26 in the opposite direction.

The aforementioned front transfer plate 7 is provided with the second guide groove 9, which has two functions. In the first phase, via the upper pulley 20, it lifts the trolley 3 to the upper position for grasping the workpiece 14. In the second phase, the further function occurs whereby the upper pulley 20 lowers the trolley 3 to a laid position to allow it to pass back through the opening 26.

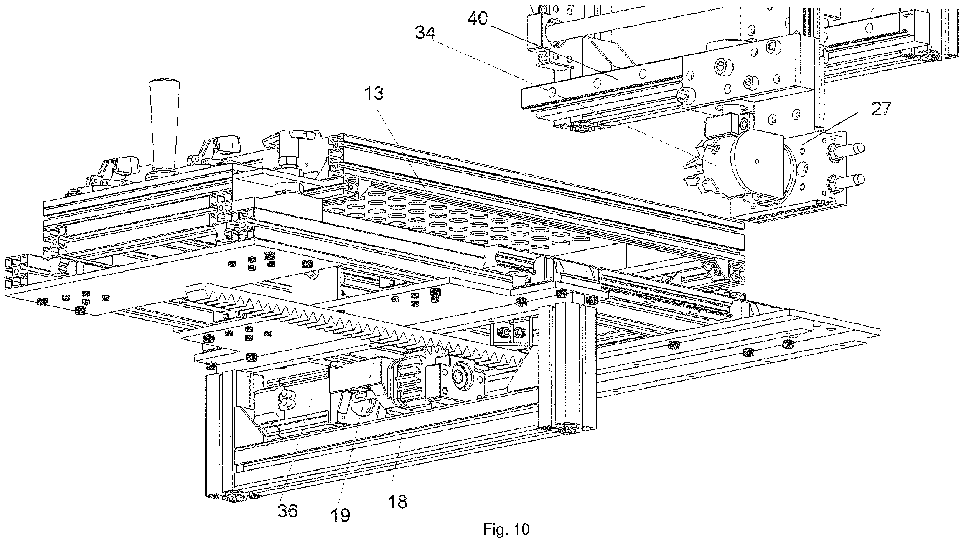

Once the trolley 3 exits the through opening 26, it continues in the tilted position to the rear guided plate 6. The latter is provided with a first guide groove 8 which again has two functions. In the first phase, via the lower pulley 21, the trolley 3 is lifted to the upper position for grasping the workpiece 14 by the gripper 34 of the palletizing arm 27, which then takes care of the correct orientation of the workpiece 14 on the pallet 13. In the second phase, the further function takes place whereby the trolley 3 is again lowered via the lower pulley 21, thanks to the first guiding groove 8 on the plate 6 to a tilted position so that it can again pass with the movable belt 2 through the opening 26. There, the trolley 3 is lifted on the plate 7 in the manner described above and takes the new workpiece 14. The palletizing arm 27 can be seen in Fig. 10.

The plates 6, 7 are arranged on the edges of the movable belt 2 at any angle corresponding to the angle at which the trolley 3 is arranged on the carrier 24. The trolley 3 is moved from an upright to a horizontal tilted position in the same plane relative to the movable belt 2.

The first guide groove 8 is orientated in an arc from top to bottom on the rear guiding plate 6, while the second guide groove 9 is also oriented in an arc but from bottom to the top on the front transfer plate 7. In order to facilitate the engagement of the pulleys 20 and 21 in the two guide grooves 9, 8, those are provided with guide widening 22 on their edges on the plates 7, 6.

The CNC lathe 23 has two spindles arranged opposite each other, wherein on one spindle which is further away from the through opening 26 a first grasping part 15 of the workpiece 14 is machined and on the opposite spindle a second grasping part 16 of the workpiece 14 is made, wherein the workpiece is clamped at the end of the machining in the counter-spindle of the machine on the shaped third part 17. The trolley 3 on the linear transport module 1 receives the workpiece 14 by clamping it with the gripper 5 by the first grasping part 15, as shown in Fig. 2.

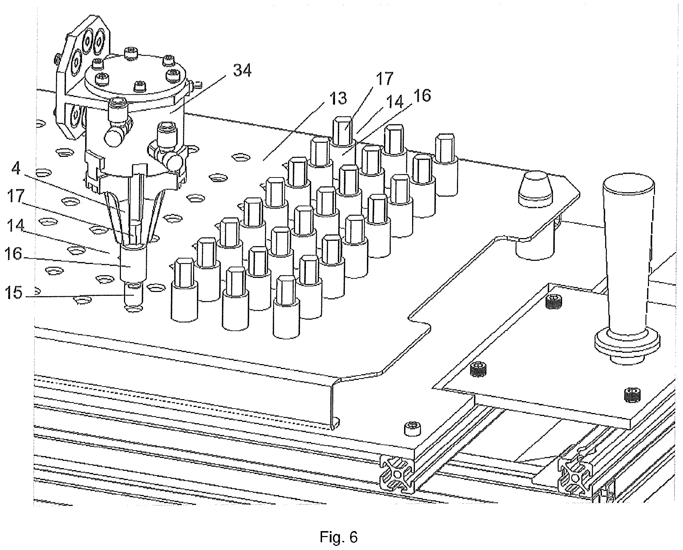

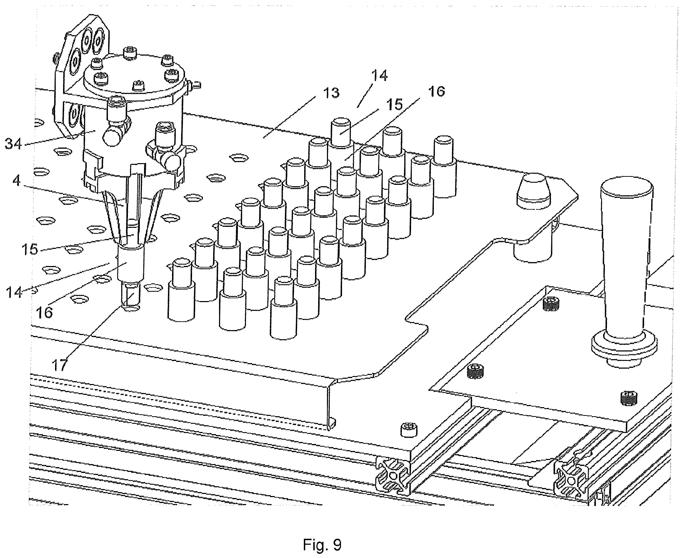

The workpiece 14 in the embodiment shown has three parts, which may be cylindrical or square and may be further provided with an additional element, for example a flattening, a groove, a transverse or longitudinal opening, etc. Thus, when extracting, the grasping surface for the gripper 5 is the first grasping part 15, see Fig. 2, and the aim is, in the first case, that the workpiece 14 is inserted into the pallet 13 by the first grasping part 15, as shown in Fig. 6, or, in the second case, that the workpiece 14 is inserted into the pallet 13 by the shaped third part 17, as shown in Fig. 9.

Thus, in Fig. 3, the workpiece 14 is ready in position for transfer to the gripper 34 of the palletizing arm 27. There are now two possibilities. The first possibility is that the workpiece 14 is passed directly to the gripper 34 of the palletizing arm 27, which grips it with the axial gripper 4 by the shaped third part 17, as shown in Fig. 5. In this case, the workpiece 14 is then placed in the pallet so that the workpiece 14 is placed in the opening of the pallet 13 by the first grasping part 15. Thus, the first grasping part 15 is after being taken up by the gripper 34 free and by this part 15 the workpiece 14 is placed after rotation of the gripper 34 by 90° into position in the pallet 13, see Fig. 6.

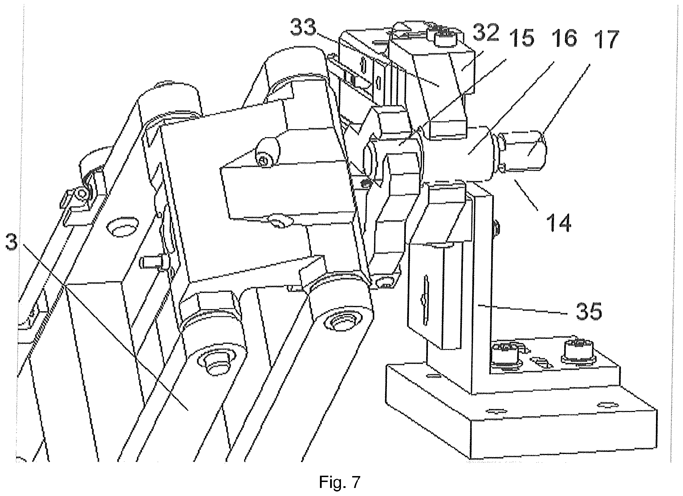

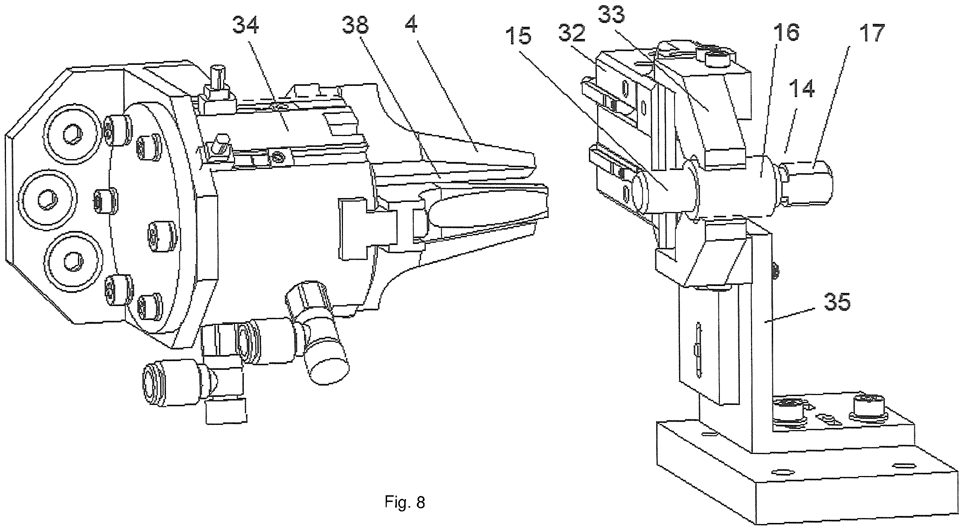

The second possibility is, that the workpiece 14 is taken up by the stationary gripper 32, which is arranged in front of the trolley 3 and therefore in front of the workpiece 14. This is because the workpiece 14 needs to be placed in the pallet 13 by the shaped third part 17 and therefore the gripper 34 of the palletizing arm 27 has to grasp it by the first grasping part 15. Therefore, the stationary gripper 32 shown in Fig. 7 is arranged here, which is aon the stand 35. The stationary gripper 32 grasps the workpiece 14 by the second grasping part 16 with the clamp 33. Subsequently, the gripper 34 of the palletizing arm 27 arrives from behind, as shown in Fig. 8, and grasps the workpiece 14 by the first grasping part 15. Fig. 9 then shows the next phase, in which in this case the workpiece 14 is then placed in the pallet 13 by the shaped third part 17.

The advantage of the present manipulator is that the workpiece 14 is always placed in the pallet 13 in the same way and correctly orientated in the appropriate place.

Fig. 10 shows a view of the device for the shifting pallet 13 from below, where it can be seen that it is arranged slidingly on a support structure and connected to a toothed rack 19 which co-engages with a pinion 18 which is connected to a motor 36 with an encoder. By means of this toothed mechanism, the pallet 13 can be moved in the longitudinal direction. When one entire transverse row of the pallet 13 is filled with workpieces 14, the pallet is moved by one transverse row of holes in the longitudinal direction. When the entire pallet 13 has been filled with workpieces 14, the pallet 13 moves further linearly into the pallet exchange area in the same way as the pallet 13 is moved in the longitudinal direction. Also palletizing arm 27 is shown in the figure on which the gripper 34 is arranged. It can be seen that the palletizing module 10 is provided with a linear guide 40 for the palletizing arm 27, representing a three-axis mechanism with the possibility of rotation.

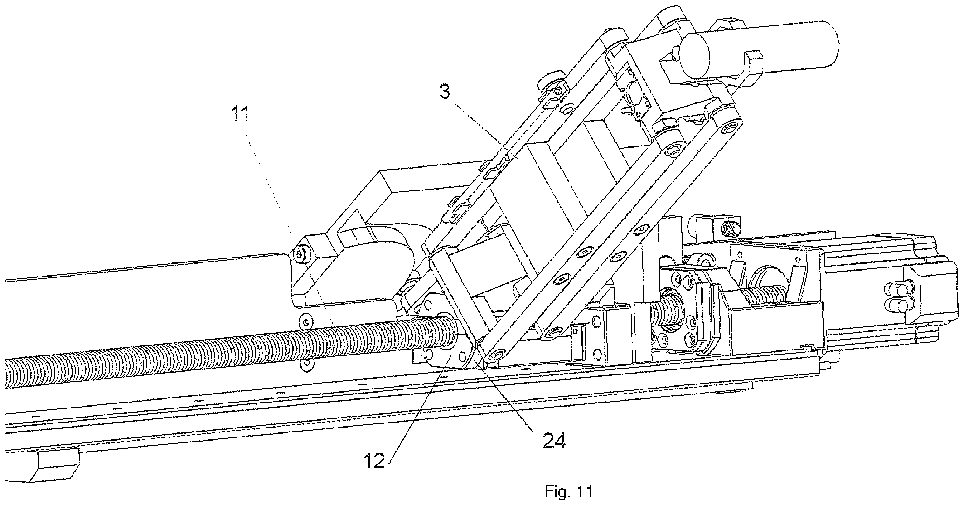

Fig. 11 shows a variant design of the movable driving element, wherein it is made as a power screw 11 and the carrier 24 is provided with a power nut 12 through which the power screw 12 passes.

### List of reference signs:

1 linear workpiece transport module
2 pás - movable belt
3 trolley
4 axial clamp
5 gripper
6 rear guiding plate
7 front transfer plate
8 first guide groove
9 second guide groove
10 palletizing module
11 power screw
12 power nut
13 pallet
14 workpiece
15 first grasping part
16 second grasping part
17 shaped part
18 pinion
19 rack
20 upper pulley
21 lower pulley
22 guide widening
23 CNC lathe
24 carrier
25 toothed belt
26 opening
27 palletizing arm
28 front arm
29 rear arm
30 workspace
31 rectangular support plate
32 stationary gripper
33 stationary gripper clamp
34 gripper of palletizing arm
35 stationary gripper stand
36 motor
37 upper end of arms
38 grasping through
39 rail
40 linear guide

## Claims

1. Manupulating device for removing workpieces from a CNC lathe and placing them on pallets, wherein the CNC lathe is equipped with a removal opening through which a movable driving element passes, **characterized in that** the movable driving element is made as a movable belt (2) for carrying a carrier (24) guided by a rail (39), on which, by its lower part, a trolley (3) of a gripper (5) made as a kinematic body of the parallelogram type is arranged, having two parallel arms, namely a rear arm (29) and a front arm (28), both in the form of a frame, wherein the front arm (28) is pivotally connected via pins to the carrier (24), whereby at the upper ends (37) the front arm (28) and the rear arm (29) are connected via a rectangular support plate (31) provided with pins, on which a gripper (5) for the workpiece (14) is arranged, while on the side of the front arm (28) which is closer to the workspace (30) of the CNC lathe (23) an upper pulley (20) and a lower pulley (21) are arranged, which are configured for movement in the guide grooves (8, 9) of plates (6, 7), wherein the rear quiding plate (6) with the first guide groove (8) for guiding the lower pulley (21) is arranged in the palletizing module (10), and the front transfer plate (7) with the second guide groove (9) for guiding the upper pulley (20) is arranged inside the workspace (30) of the CNC lathe (23) and both plates (6, 7) and the trolley (3) have the same angular orientation, wherein the first guide groove (8) is oriented in an arc from top to the bottom on the rear guide plate (6), while the second guide groove (9) is also oriented in an arc but from bottom to the top on the front transfer plate (7), wherein the grooves (8, 9) are on their edges on the plates (6, 7) provided with guide widenings (22).

2. Manupulating device according to the claim 1, **characterized in that** gripper (5) on the trolley (3) is configured for transfer of the workpiece (14) to the palletizing module (10) which is provided with a linear guide (40) for the palletizing arm (27), together creating a three-axis mechanism with the possibility of rotation, wherein the gripper (34) of the palletizing arm (27) is provided with an axial clamp (4) configured to grasp the workpiece (14) in its axis by its both sides of its grasping parts for transferring it into a hole in the pallet (13) corresponding to the cross-section of deposited grasping part, and for depositing of the workpiece (14) into the pallet by either one or the other grasping part according to the shape of the holes in the pallet.

3. Handling device according to claim 1, **characterized in that** the movable driving element is made as a power screw (11) and the carrier (24) is provided with a power nut (12) through which the power screw (11) passes.

4. Manipulation device according to any one of the preceding claims, **characterized in that** the carrier (24), on one side facing away from the movable belt (2), is provided with an obliquely chamfered surface, so that the trolley (3) is arranged at an inclined angle to the movable belt (2) and at the same time plates (6, 7) are inclined at the same angle.

5. Manipulation device according to any one of the preceding claims, **characterized in that** the rear guiding plate (6) is arranged lower in relation to the front transfer plate (7) so as to allow the driving into of the lower pulley (21), which is lower than the upper pulley (20).

6. Manipulation device according to claim 2, **characterized in that** the axial clamp (4) is internally provided with grasping troughs (38).

7. Manipulation device according to claims 2 and 6, **characterized in that** between the trolley (3) and the gripper (34) of the palletizing arm (27) a stationary gripper (32) is arranged for releasing the grasping part of the workpiece (14) which has been grasped by the gripper (5) of the trolley (3) for its grasping by the gripper (34) of the palletizing arm (27) in the palletizing module (10).
